# EUROPEAN PATENT APPLICATION

(11) **EP 4 807 869 A1**
(43) Date of publication of application: **16.09.2026**
(21) Application number: 26157495.8
(22) Date of filing: 10.02.2026
(51) Int. Cl.: H01M 50/211, H01M 50/503, H01M 50/507, H01M 50/516, H01M 50/548

(54) **BATTERY ASSEMBLY**

(30) Priority: 11.03.2025 KR 20250031347
(71) Applicant: SK On Co., Ltd., Seoul 03161 (KR)
(72) Inventor: KIM, Do Youn, 34124 Daejeon (KR); LEE, Dae Hyeon, 34124 Daejeon (KR); CHOI, Keun Woo, 34124 Daejeon (KR)
(74) Representative: Prüfer & Partner mbB Patentanwälte · Rechtsanwälte

(57) **Abstract**

A battery assembly according to the present disclosure comprises a cell array comprising a plurality of battery cells arranged in a first direction, wherein each of the plurality of battery cells comprises a terminal part protruding in a second direction intersecting the first direction; a busbar plate comprising an insertion slit into which the terminal part is inserted, wherein the insertion slit has a slit shape extending in a third direction intersecting each of the first direction and the second direction; and a busbar frame disposed between the busbar plate and the cell array and comprising an insertion hole, wherein the insertion hole overlaps the insertion slit in the second direction and accommodates at least a portion of the terminal part, wherein the busbar plate comprises an exposure hole spaced apart from the insertion slit and passing through the busbar plate in the second direction to expose a portion of the busbar frame, and an edge of at least a portion of the exposure hole has a line shape parallel to the third direction with respect to a shape on a plane defined by the first direction and the third direction.

## Description

### BACKGROUND OF THE INVENTION

### 1. Field

The present disclosure relates to a battery assembly.

### 2. Description of the Related Art

A battery assembly may include a cell array including a plurality of battery cells, and a busbar assembly connected to the cell array. The busbar assembly may include a busbar plate including an insertion slit into which a terminal part of each of the plurality of battery cells is inserted, and a busbar frame that supports (or fixes) the busbar plate.

In a process of manufacturing the battery assembly, the terminal part may be inserted into the insertion slit and then be welded to one surface of the busbar plate adjacent to the insertion slit. In this case, reliability of the welding bond may be ensured and stability and a lifespan of the battery assembly may be improved only when a position at which the terminal part is welded (i.e., the welding position) is accurately identified.

### SUMMARY OF THE INVENTION

An object of the present disclosure is to improve stability of a battery assembly.

Another object of the present disclosure is to improve a lifespan of a battery assembly.

The present disclosure may be widely applied in fields of electric vehicles, battery charging stations, energy storage systems (ESSs), and other green technologies such as photovoltaics and wind power utilizing batteries. In addition, the present disclosure may be used in eco-friendly mobility including electric vehicles and hybrid vehicles, in order to prevent a climate change by suppressing air pollution and greenhouse gas emission.

A battery assembly according to the present disclosure may include: a cell array comprising a plurality of battery cells arranged in a first direction, wherein each of the plurality of battery cells includes a terminal part protruding in a second direction intersecting the first direction; a busbar plate including an insertion slit into which the terminal part is inserted, wherein the insertion slit has a slit shape extending in a third direction intersecting each of the first direction and the second direction; and a busbar frame disposed between the busbar plate and the cell array and including an insertion hole, wherein the insertion hole overlaps the insertion slit in the second direction and accommodates at least a portion of the terminal part. The busbar plate may include an exposure hole spaced apart from the insertion slit and passing through the busbar plate in the second direction to expose a portion of the busbar frame An edge of at least a portion of the exposure hole may have a line shape parallel to the third direction with respect to a shape on a plane defined by the first direction and the third direction.

In an embodiment, the exposure hole may have a rectangular shape, in which each side of the exposure hole is parallel to the first direction or the third direction, with respect to the shape on the plane defined by the first direction and the third direction.

In an embodiment, the busbar plate may further include a coupling hole passing through the busbar plate in the second direction. The busbar frame may further include a coupling member inserted into the coupling hole to fix the busbar plate.

In an embodiment, the coupling member may include a heat-fusible member that is thermally fused to one surface of the busbar plate.

In an embodiment, the exposure hole may be spaced apart from each of the coupling hole and the coupling member.

In an embodiment, a width of the insertion slit in the first direction may be less than a width of the insertion hole in the first direction.

In an embodiment, a maximum width of the exposure hole in the first direction may be greater than a width of the insertion slit in the first direction.

In an embodiment, the busbar plate may include a bending part bent to protrude in the second direction. The bending part may include a guide groove configured to communicate with one end of the insertion slit and pass through the bending part in the second direction.

In an embodiment, a maximum width of the guide groove in the first direction may be greater than a width of the insertion slit in the first direction.

In an embodiment, a width of the guide groove in the first direction may gradually decrease as it approaches one end of the insertion slit.

In an embodiment, a width of the insertion slit in the first direction may be about 100% or more and about 105% or less of a width of the terminal part in the first direction.

In an embodiment, the terminal part may be welded to the busbar frame on an area adjacent to the insertion slit.

In an embodiment, the busbar plate may further include a recess recessed from one side of the busbar plate toward the insertion slit with respect to the shape on the plane defined by the first direction and the third direction.

In an embodiment, an edge of at least a portion of the recess may be parallel to the third direction with respect to the shape on the plane defined by the first direction and the third direction.

In an embodiment, at least a portion of the busbar frame overlapping the recess in the second direction may be exposed by the recess.

According to an embodiment of the present disclosure, the battery assembly having the improved stability may be provided.

According to another embodiment of the present disclosure, the battery assembly having the improved lifespan may be provided.

### BRIEF DESCRIPTION OF THE DRAWINGS

Fig. 1 is an exploded perspective view illustrating a battery assembly according to an embodiment of the present disclosure.
Fig. 2 is a perspective view illustrating an example of a method for connecting a busbar assembly to a cell array.
Fig. 3 is a perspective view for explaining the busbar assembly connected to the cell array according to the method of Fig. 2.
Fig. 4 is a front view of a busbar plate according to an embodiment of the present disclosure.
Fig. 5 is a side view of the busbar plate according to an embodiment of the present disclosure.
Fig. 6 is a rear view of the busbar plate according to an embodiment of the present disclosure.
Fig. 7 is a view for explaining an example of a busbar assembly including the busbar plat of Figs. 4 to 6.
Fig. 8 is a view of the busbar assembly of Fig. 7 in which the busbar plate is omitted.
Fig. 9 is a view for explaining a state in which a cell array is connected to the busbar assembly of Fig. 7.
Fig. 10 is an enlarged view illustrating one area of Fig. 9.
Fig. 11 is a front view of a busbar plate according to another embodiment of the present disclosure.
Fig. 12 is a view for explaining an example of a busbar assembly including the busbar plate of Fig. 11.

### DETAILED DESCRIPTION

Hereinafter, the present disclosure will be described in detail with reference to the accompanying drawings. However, this is merely illustrative, and the present disclosure is not limited to a specific embodiment illustrated as an example of the present disclosure.

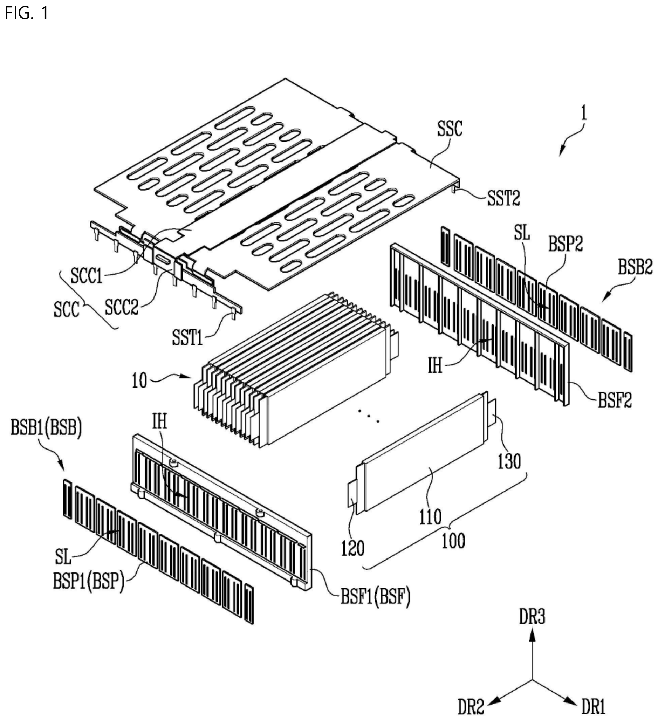

Hereinafter, a first direction DR1, a second direction DR2, and a third direction DR3 are defined with reference to Fig. 1.

The first direction DR1 may be a direction in which a plurality of battery cells 100 are stacked. In an embodiment, the first direction DR1 may be referred to as a "stacking direction".

The second direction DR2 may be a direction that intersects (or is perpendicular to) the first direction DR1. Each of the plurality of battery cells 100 may include a terminal part 120, and the second direction DR2 may be a protruding direction of the terminal part 120. In an embodiment, the second direction DR2 may be referred to as the "protruding direction".

Each of the plurality of battery cells 100 may include an opposite terminal part 130 that protrudes in a direction opposite to the protruding direction (i.e., the second direction DR2) of the terminal part 120. In an embodiment, a direction opposite to the second direction DR2 may be referred to as an "opposite protruding direction".

The third direction DR3 may be a direction that intersects (or is perpendicular to) each of the first direction DR1 and the second direction DR2. In an embodiment, the third direction DR3 may be a direction opposite to a direction in which gravity acts and may be referred to as a "height direction".

Fig. 1 is an exploded perspective view illustrating a battery assembly according to an embodiment of the present disclosure.

Referring to Fig. 1, a battery assembly 1 may include a cell array 10, a busbar plate BSP, and a busbar frame BSF.

The cell array 10 may include a plurality of battery cells 100 arranged in the first direction DR1. Each of the plurality of battery cells 100 may include a terminal part 120 that protrudes in the second direction DR2 intersecting the first direction DR1.

The busbar plate BSP may include an insertion slit SL into which the terminal part 120 is inserted. The insertion slit SL may have a slit shape that extends along the third direction DR3 that intersecting each of the first direction DR1 and the second direction DR2.

The busbar frame BSF may be disposed between the busbar plate BSP and the cell array 10. The busbar frame BSF may include an insertion hole IH. The insertion hole IH may overlap the insertion slit SL in the second direction DR2 and may accommodate at least a portion of the terminal part 120.

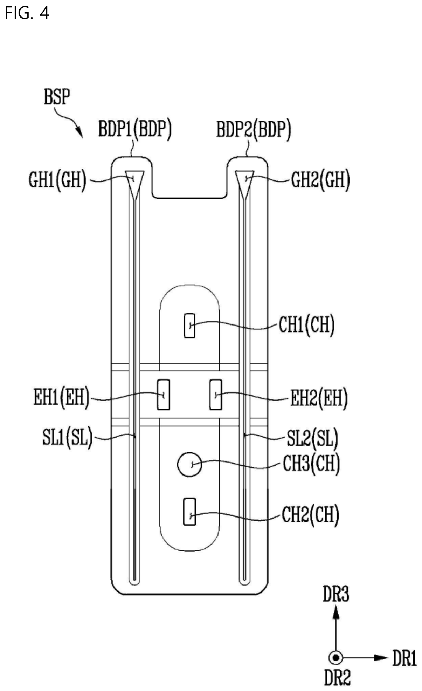

In an embodiment, the busbar plate BSP may include an exposure hole EH (see Fig. 4). The exposure hole EH (see Fig. 4) may be spaced apart from the insertion slit SL and may pass through the busbar plate BSP in the second direction DR2 to expose a portion of the busbar frame BSF.

In an embodiment, with respect to a shape on a plane defined by the first direction DR1 and the third direction DR3, at least a portion of an edge of the exposure hole EH (see Fig. 4) may have a line shape parallel to the third direction DR3.

Each of the plurality of battery cells 100 may convert chemical energy into electrical energy (or convert electrical energy into chemical energy) by using an oxidation/reduction reaction. The plurality of battery cells 100 may be arranged (or stacked) in the first direction DR1. In an embodiment, each of the plurality of battery cells 100 may include a main body part 110, a terminal part 120, and an opposite terminal part 130.

The main body part 110 may store electrical energy or supply the stored electrical energy to the outside. In an embodiment, the main body part 110 may include one or more positive electrode plates and one or more negative electrode plates. The one or more positive electrode plates and the one or more negative electrode plates may be alternately arranged (or stacked) in the first direction DR1 (e.g., ...positive electrode plate/negative electrode plate/positive electrode plate/negative electrode plate...). In an embodiment, the main body part 110 may further include a separator disposed between the positive electrode plate and the negative electrode plate, and/or an electrolyte that provides a moving path for carriers (e.g., electrons, holes, and/or lithium ions).

The terminal part 120 may protrude from the main body part 110 in the second direction DR2. The opposite terminal part 130 may protrude from the main body part 110 in a direction opposite to the second direction DR2. The terminal part 120 and the opposite terminal part 130 may be electrically connected to the one or more positive electrode plates and the one or more negative electrode plates. For example, the terminal part 120 may be electrically connected to the one or more positive electrode plates, and the opposite terminal part 130 may be electrically connected to the one or more negative electrode plates. In this case, the terminal part 120 may be referred to as a "positive electrode terminal part", and the opposite terminal part 130 may be referred to as a "negative electrode terminal part". For another example, the terminal part 120 may be electrically connected to the one or more negative electrode plates, and the opposite terminal part 130 may be electrically connected to the one or more positive electrode plates. In this case, the terminal part 120 may be referred to as a "negative electrode terminal part", and the opposite terminal part 130 may be referred to as a "positive electrode terminal part". Each of the terminal part 120 and the opposite terminal part 130 may include a material having excellent electrical conductivity.

Each of a first busbar assembly BSB1 and a second busbar assembly BSB2 may be electrically connected to the plurality of battery cells 100 included in the cell array 10. The electrical connection between the plurality of battery cells 100 and external devices (e.g., circuits, electrodes, and/or wiring) may be implemented through the first busbar assembly BSB1 and the second busbar assembly BSB2.

The first busbar assembly BSB1 may include a first busbar plate BSP1 and a first busbar frame BSF1.

The first busbar plate BSP1 may be electrically connected to the terminal part 120. In an embodiment, the first busbar plate BSP1 may include an insertion slit SL, and the terminal part 120 may be inserted into the insertion slit SL of the first busbar plate BSP1 so as to be electrically connected to the first busbar plate BSP1.

The first busbar frame BSF1 may be disposed between the first busbar plate BSP1 and the cell array 10. In an embodiment, the first busbar frame BSF1 may include an insertion hole IH. The insertion hole IH of the first busbar frame BSF1 may overlap the insertion slit SL of the first busbar plate BSP1 in the second direction DR2 and may accommodate at least a portion of the terminal part 120. That is, the terminal part 120 may be inserted into the insertion slit SL of the first busbar plate BSP1 through the insertion hole IH of the first busbar frame BSF1.

The first busbar frame BSF1 may serve to fix (or support) the first busbar plate BSP1. For example, the first busbar plate BSP1 may be fixed (or supported) to the first busbar frame BSF1 through a coupling member. In an embodiment, the first busbar assembly BSB1 may include a plurality of first busbar plates BSP1 arranged in the first direction DR1, and the plurality of first busbar plates BSP1 may be fixed to the first busbar frame BSF1.

The second busbar assembly BSB2 may include a second busbar plate BSP2 and a second busbar frame BSF2.

The second busbar plate BSP2 may be electrically connected to the opposite terminal part 130. In an embodiment, the second busbar plate BSP2 may include an insertion slit SL, and the opposite terminal part 130 may be inserted into the insertion slit SL of the second busbar plate BSP2 so as to be electrically connected to the second busbar plate BSP2.

The second busbar frame BSF2 may be disposed between the second busbar plate BSP2 and the cell array 10. In an embodiment, the second busbar frame BSF2 may include an insertion hole IH. The insertion hole IH of the second busbar frame BSF2 may overlap the insertion slit SL of the second busbar plate BSP2 in the second direction DR2 and may accommodate at least a portion of the opposite terminal part 130. That is, the opposite terminal part 130 may be inserted into the insertion slit SL of the second busbar plate BSP2 through the insertion hole IH of the second busbar frame BSF2.

The second busbar frame BSF2 may serve to fix (or support) the second busbar plate BSP2. For example, the second busbar plate BSP2 may be fixed (or supported) to the second busbar frame BSF2 through a coupling member. In an embodiment, the second busbar assembly BSB2 may include a plurality of second busbar plates BSP2 arranged in the first direction DR1, and the plurality of second busbar plates BSP2 may be fixed to the second busbar frame BSF2.

In an embodiment, the battery assembly 1 may further include a sensing circuit SCC. The sensing circuit SCC may be electrically connected to the plurality of battery cells 100. For example, the sensing circuit SCC may include a first sensing terminal SST1 and a second sensing terminal SST2. The first sensing terminal SST1 may electrically connect the sensing circuit SCC to the first busbar plate BSP1, and thus, the sensing circuit SCC and the terminal part 120 of each of the plurality of battery cells 100 may be electrically connected to each other. The second sensing terminal SST2 may electrically connect the sensing circuit SCC to the second busbar plate BSP2, and thus, the sensing circuit SCC and the opposite terminal parts 130 of the plurality of battery cells 100 may be electrically connected to each other.

In an embodiment, the sensing circuit SCC may measure a voltage (or current) applied to the plurality of battery cells 100. The sensing circuit SCC may measure a voltage (or current) applied to the plurality of battery cells 100, store a voltage value (or current value) of the measured voltage (or current), and transfer the stored voltage value (or current value) to an external device. In an embodiment, the sensing circuit SCC may measure a temperature of each of the plurality of battery cells 100. The sensing circuit SCC may measure a temperature of each of the plurality of battery cells 100, store the measured temperature value, and transfer the stored temperature value to an external device.

In an embodiment, the sensing circuit SCC may include a first sensing circuit SCC1 and a second sensing circuit SCC2. The first sensing circuit SCC1 may extend in the second direction DR2. The second sensing circuit SCC2 may extend in the first direction DR1 from each of ends of the first sensing circuit SCC1 in the extension direction (i.e., the second direction DR2).

The first sensing circuit SCC1 may cover at least a portion of the plurality of battery cells 100. In an embodiment, the first sensing circuit SCC1 may cover a top surface of at least a portion of the plurality of battery cells 100. The second sensing circuit SCC2 may be electrically connected to the component for measuring the voltage and/or temperature.

In an embodiment, the first sensing circuit SCC1 and the second sensing circuit SCC2 may be flexible printed circuit boards (FPCBs). In an embodiment, the first sensing circuit SCC1 and the second sensing circuit SCC2 may be integrated with each other.

The sensing cover SSC may support the sensing circuit SCC. The sensing circuit SCC may be coupled and supported to the sensing cover SSC, and thus, stress applied to the sensing circuit SCC may be dispersed. In an embodiment, the sensing cover SSC may include a plurality of openings for releasing a gas.

In an embodiment, the first busbar assembly BSB1 and the second busbar assembly BSB2 may be substantially symmetrical with respect to each other with the cell array 10 therebetween. Thus, the second busbar assembly BSB2 may be described in substantially the same manner (or, similarly) as the first busbar assembly BSB1. Thus, the following description will be based on the first busbar assembly BSB1, and the description of the first busbar assembly BSB1 may also be substantially equally (or similarly) applied to the second busbar assembly BSB2.

Hereinafter, the first busbar assembly BSB1 may be referred to as a "busbar assembly BSB", the first busbar plate BSP1 may be referred to as a "busbar plate BSP", and the first busbar frame BSF1 may be referred to as a "busbar frame BSF".

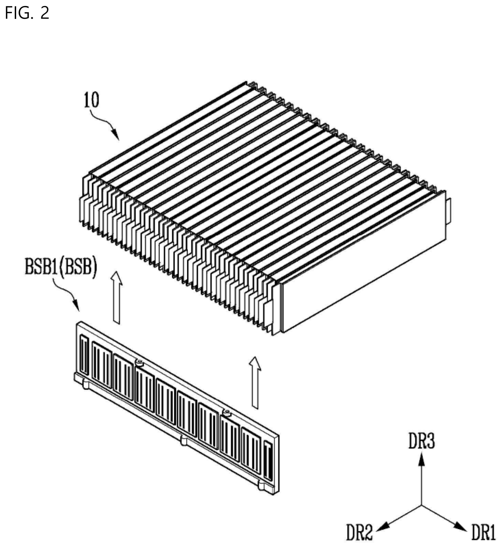

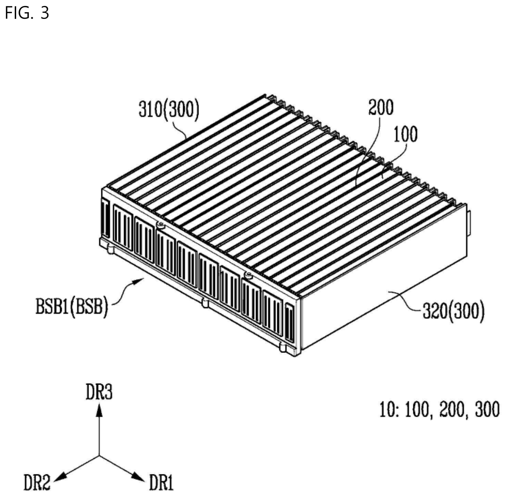

Fig. 2 is a perspective view illustrating an example of a method for connecting the busbar assembly to the cell array. Fig. 3 is a perspective view for explaining the busbar assembly connected to the cell array according to the method of Fig. 2.

Referring to Fig. 2, an embodiment of a method for connecting the busbar assembly BSB to the cell array 10 by fixing the terminal part 120 to the insertion slit SL of the busbar frame BSF is schematically illustrated. As illustrated in Fig. 2, to connect the busbar assembly BSB to the cell array 10, the busbar assembly BSB may move in the third direction DR3 below the cell array 10.

Referring to Fig. 3, the busbar assembly BSB may be connected to the cell array 10 according to the method described in Fig. 2. In this case, the terminal part 120 of each of the plurality of battery cells 100 may be inserted into the insertion slit SL of the busbar plate BSP through the insertion hole IH of the busbar frame BSF.

In an embodiment, the cell array 10 may further include an insulating member 200. The insulating member 200 may be disposed between two adjacent battery cells 100 of the plurality of battery cells 100. The insulating member 200 may serve to block diffusion of heat when thermal runaway occurs in the battery cell 100.

In an embodiment, the cell array 10 may further include an endplate 300. The endplate 300 may include a first endplate 310 and a second endplate 320. The first endplate 310 and the second endplate 320 may face each other with the plurality of battery cells 100 therebetween.

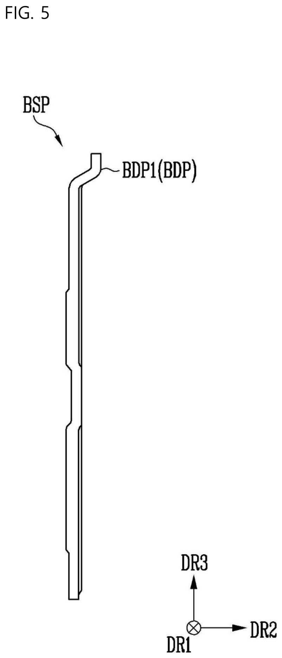

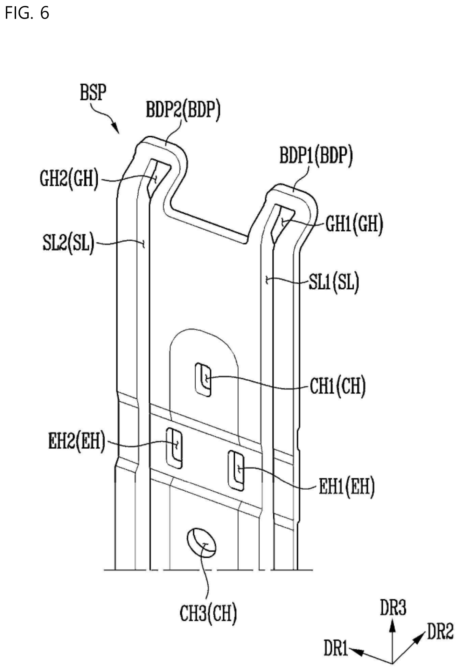

Fig. 4 is a front view of the busbar plate according to an embodiment of the present disclosure. Fig. 5 is a side view of the busbar plate according to an embodiment of the present disclosure. Fig. 6 is a rear view of the busbar plate according to an embodiment of the present disclosure.

Referring to Figs. 4 to 6, the busbar plate BSP may include an insertion slit SL. As described with reference to Fig. 1, the terminal part 120 may be inserted into and fixed to the insertion slit SL. The insertion slit SL may have a slit shape extending in the third direction DR3.

In an embodiment, the insertion slit SL may include a first insertion slit SL1 and a second insertion slit SL2. The first insertion slit SL1 and the second insertion slit SL2 may be spaced apart from each other in the first direction DR1. The first insertion slit SL1 may be an insertion slit into which the terminal part 120 of one battery cell 100 of the plurality of battery cells 100 is inserted. The second insertion slit SL2 may be an insertion slit into which the terminal part 120 of another battery cell 100 adjacent to one of the battery cells 100 is inserted.

In an embodiment, a width of the insertion slit SL in the first direction DR1 may be about 100% or more and about 105% or less of a width of the terminal part 120 in the first direction DR1. As described above, the insertion slit SL may have a slit shape that is suitable for the terminal part 120 to be inserted and fixed thereto.

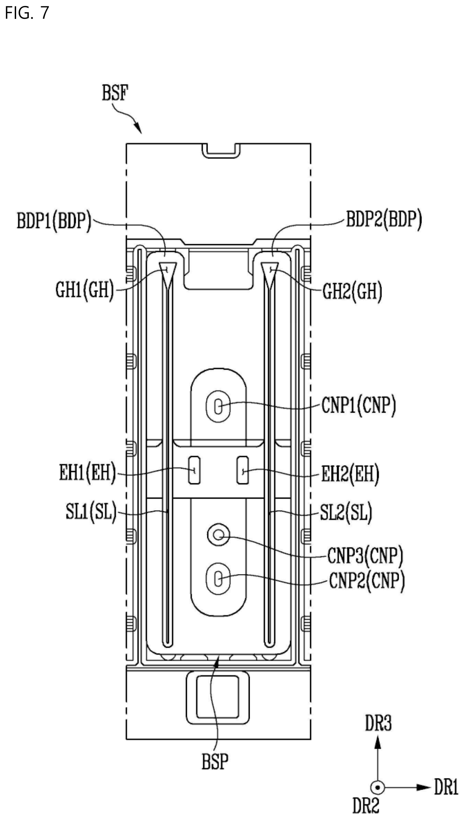

In an embodiment, the busbar plate BSP may include an exposure hole EH. The exposure hole EH may be spaced apart from the insertion slit SL and may pass through the busbar plate BSP in the second direction DR2. In an embodiment, a relative position of the insertion slit SL with respect to the exposure hole EH may be determined. This will be described in detail with reference to Fig. 7.

In an embodiment, the exposure hole EH may include a first exposure hole EH1 and a second exposure hole EH2. The first exposure hole EH1 and the second exposure hole EH2 may be spaced apart from each other. For example, the first exposure hole EH1 and the second exposure hole EH2 may be spaced apart from each other in the first direction DR1. The first exposure hole EH1 may be adjacent to the first insertion slit SL1 compared to the second exposure hole EH2. When compared to the first exposure hole EH1, the second exposure hole EH2 may be adjacent to the second insertion slit SL2.

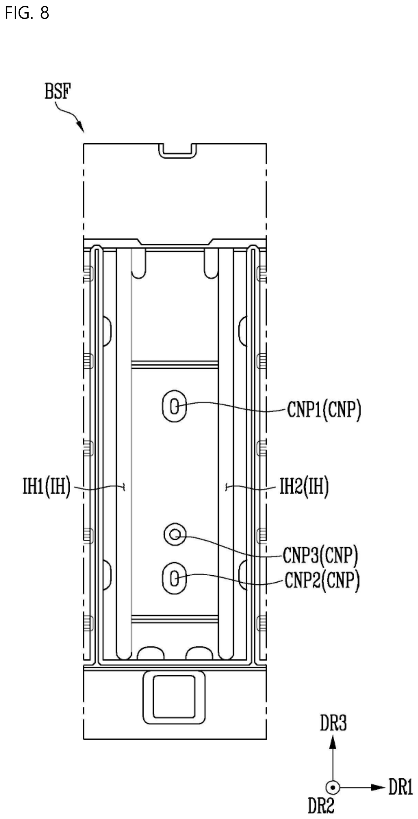

In an embodiment, the busbar plate BSP may further include a coupling hole CH. The coupling hole CH may be spaced apart from each of the insertion slit SL and the exposure hole EH and may pass through the busbar plate BSP in the second direction DR2. In an embodiment, the busbar plate BSP may be fixed to the busbar frame BSF through the coupling hole CH. This will be described in detail with reference to Figs. 7 and 8.

In an embodiment, the coupling hole CH may include a first coupling hole CH1, a second coupling hole CH2, and a third coupling hole CH3. The first coupling hole CH1, the second coupling hole CH2, and the third coupling hole CH3 may be spaced apart from each other. For example, the first coupling hole CH1, the second coupling hole CH2, and the third coupling hole CH3 may be spaced apart from each other in the third direction DR3.

In an embodiment, the busbar plate BSP may further include a bending part BDP that is bent to protrude in the second direction DR2. The bending part BDP may further include a guide groove GH. The guide groove GH may communicate with an end of the insertion slit SL and may pass through the bending part BDP in the second direction DR2.

In an embodiment, the bending part BDP may include a first bending part BDP1 and a second bending part BDP2. The first bending part BDP1 may include a first guide groove GH1, and the second bending part BDP2 may include a second guide groove GH2. The first guide groove GH1 may communicate with one end of the first insertion slit SL1, and the second guide groove GH2 may communicate with one end of the second insertion slit SL2.

In an embodiment, a maximum width of the guide groove GH in the first direction DR1 may be greater than a width of the insertion slit SL in the first direction DR1. As described with reference to Figs. 2 and 3, the busbar assembly BSB may move in the third direction DR3 relative to the cell array 10 to connect the busbar assembly BSB to the cell array 10. In this case, the terminal part 120 may be inserted into the guide groove GH and then guided to be inserted into the insertion slit SL along the shape of the guide groove GH. Thus, the terminal part 120 may be inserted into and fixed to the insertion slit SL. That is, the guide groove GH may guide the terminal part 120 so that the terminal part 120 is inserted into an accurate position (i.e., the insertion slit SL).

In the above-described embodiment, a width of the guide groove GH in the first direction DR1 may gradually decrease as it approaches the one end of the insertion slit SL. That is, a width of the guide groove GH in the first direction DR1 may gradually decrease along a direction opposite to the third direction DR3. Since the guide groove GH is configured as described above, when the method for connecting the busbar assembly BSB to the cell array 10 is performed as described with reference to Figs. 2 and 3, the terminal part 120 may be effectively guided to be more precisely inserted into the insertion slit SL.

Fig. 7 is a view for explaining an example of the busbar assembly including the busbar plat of Figs. 4 to 6. Fig. 8 is a view of the busbar assembly of Fig. 7 in which the busbar plate is omitted.

Referring to Figs. 7 and 8, the busbar assembly BSB may include a busbar frame BSF and a busbar plate BSP fixed to the busbar frame BSF.

As described with reference to Fig. 3, in the state in which the busbar assembly BSB is connected to the cell array 10, the terminal part 120 may be inserted into and fixed to the insertion slit SL. In this case, in an embodiment, the terminal part 120 may be welded to the busbar frame BSF on an area adjacent to the insertion slit SL.

In the above-described embodiment, to weld and couple the terminal part 120 to the busbar frame BSF, it is necessary to accurately identify a position (i.e., welding position) of the insertion slit SL, into which the terminal part 120 is inserted and fixed. In an embodiment, an image of the busbar assembly BSB illustrated in Fig. 7 may be obtained by using an imaging device (e.g., a camera), the insertion slit SL (or the terminal part 120 inserted into the insertion slit SL) may be identified from the captured image, and the position of the insertion slit SL may be determined to determine the welding position.

However, since the width of the insertion slit SL in the first direction DR1 may be substantially the same (or similar) as the width of the terminal part 120 in the first direction DR1 (e.g., the width of the insertion slit SL in the first direction DR1 may be about 100% or more and about 105% or less of the width of the terminal part 120 in the first direction DR1), it may be substantially difficult to identify the insertion slit SL (or identify the terminal part 120 inserted into the insertion slit SL) within the captured image.

In the present disclosure, since the exposure hole EH is identified in the captured image, and the position of the insertion slit SL is determined with respect to the position of the identified exposure hole EH, the welding position may be determined. For example, when manufacturing the busbar frame BSF, the insertion slit SL and the exposure hole EH may be respectively defined at preset positions. Thus, relative position information such as a distance between the exposure hole EH and the insertion slit SL may be previously identified before obtaining the captured image. Thus, when the image is obtained, and the position of the exposure hole EH is identified within the captured image, the position of the insertion slit SL (i.e., the welding position) may be identified with respect to the position of the exposure hole EH by using the relative position information.

This may be because it is easier to identify the exposure hole EH rather than the insertion slit SL within the captured image. In other words, this is because the exposure hole EH, which has a relatively larger width in the first direction DR1, is more easily identified in the captured image than the insertion slit SL, which has a relatively smaller width in the first direction DR1.

In an embodiment, with respect to a shape on a plane defined by the first direction DR1 and the third direction DR3, at least a portion of an edge of the exposure hole EH may have a line shape parallel to the third direction DR3. Here, since at least a portion of the edge of the exposure hole EH has the line shape, identification of at least a portion of the edge of the exposure hole EH may be facilitated in the captured image. Thus, it may be easy to determine the position of the insertion slit SL with respect to the exposure hole EH.

In an embodiment, with respect to the shape on the plane defined by the first direction DR1 and the third direction DR3, the exposure hole EH may have a rectangular shape in which each side is parallel to the first direction DR1 and the third direction DR3. As described above, when the exposure hole EH has the rectangular shape, it may be easier to identify the edge of the exposure hole EH in the captured image.

In an embodiment, a maximum width of the exposure hole EH in the first direction DR1 may be greater than a width of the insertion slit SL in the first direction DR1. Thus, the exposure hole EH may be more easily identified in the captured image than the insertion slit SL.

In an embodiment, the busbar plate BSP may include a coupling hole CH that passes through the busbar plate BSP in the second direction DR2, and the busbar frame BSF may include a coupling member CNP that is inserted into the coupling hole CH to fix the busbar plate BSP. In the above-described embodiment, the coupling member CNP may include heat-fusible members that are thermally fused to one surface of the busbar plate BSP.

For example, the coupling member CNP may include a first coupling member CNP1, a second coupling member CNP2, and a third coupling member CNP3. The first coupling member CNP1 may be inserted into the first coupling hole CH1, the second coupling member CNP2 may be inserted into the second coupling hole CH2, and the third coupling member CNP3 may be inserted into the third coupling hole CH3. In an embodiment, each of the first coupling member CNP1 and the second coupling member CNP2 may be a heat-fusible member that is thermally fused to one surface of the busbar plate BSP. In an embodiment, the third coupling member CNP3 may be a bolt inserted into the third coupling hole CH3 or a protrusion that protrudes from the busbar frame BSF in the second direction DR2 and is inserted into the third coupling hole CH3. In this case, the exposure hole EH may be spaced apart from each of the coupling hole CH and the coupling member CNP.

As illustrated in FIG. 8, the busbar frame BSF may include an insertion hole IH. As illustrated in Fig. 7, the insertion hole IH may overlap the insertion slit SL in the second direction DR2. In an embodiment, the insertion hole IH may include a first insertion hole IH1 and a second insertion hole IH2. The first insertion hole IH1 may overlap the first insertion slit SL1 in the second direction DR2. The second insertion hole IH2 may overlap the second insertion slit SL2 in the second direction DR2.

In an embodiment, a width of the insertion slit SL in the first direction DR1 may be smaller than a width of the insertion hole IH in the first direction DR1. That is, the width of the insertion hole IH in the first direction DR1 may be greater than a width of the terminal part 120 in the first direction DR1 in consideration of an insertion margin of the terminal part 120. The width of the insertion slit SL in the first direction DR1 may be substantially the same (or similar) to the width of the terminal part 120 in the first direction DR1 for fixing the terminal part 120.

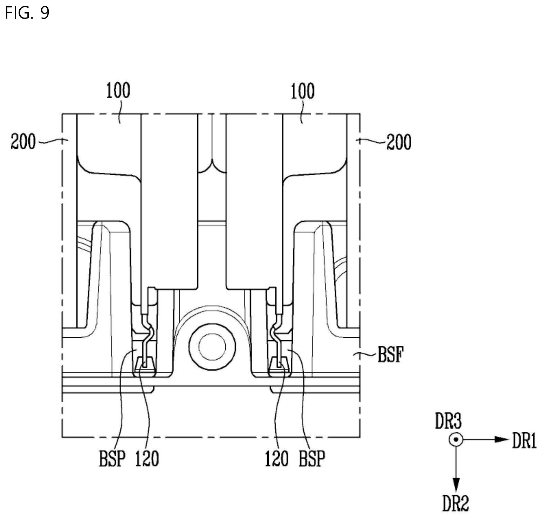

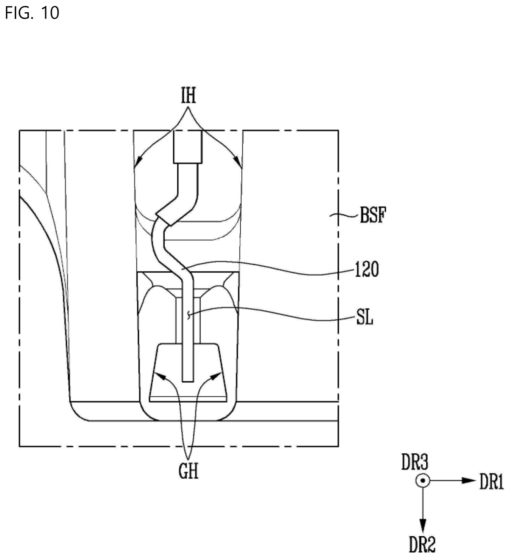

Fig. 9 is a view for explaining a state in which the cell array is connected to the busbar assembly of Fig. 7. Fig. 10 is an enlarged view illustrating one area of Fig. 9.

Referring to Figs. 9 and 10, the terminal part 120 may be inserted into and fixed to the insertion slit SL through the insertion hole IH. In this case, during the insertion of the terminal part 120 (e.g., as described with reference to Fig. 2), the terminal part 120 may be guided by the guide groove GH. Since the terminal part 120 is guided by the guide groove GH, the terminal part 120 may be more precisely inserted into the insertion slit SL having the relatively small width in the first direction DR1.

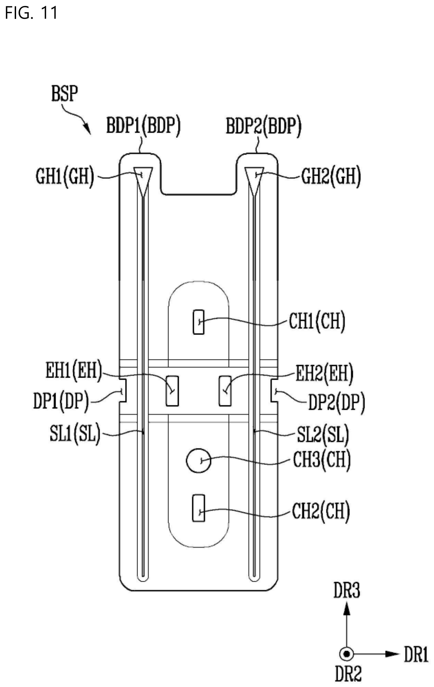

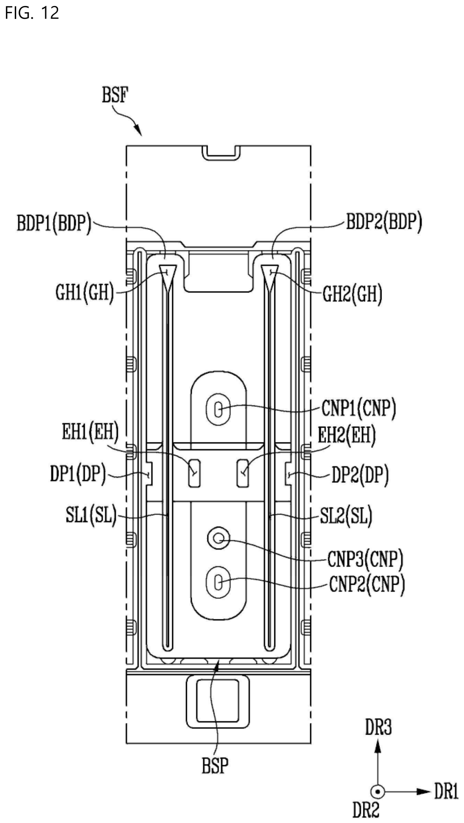

Hereinafter, with reference to Figs. 11 and 12, a busbar plate according to another embodiment of the present disclosure will be described. Hereinafter, the description will be mainly focused on differences compared to the busbar plate BSP described with reference to Figs. 1 to 10. For the descriptions that have been omitted, the foregoing descriptions will be cited from the above-described contents.

Fig. 11 is a front view a busbar plate according to another embodiment of the present disclosure. Fig. 12 is a view for explaining an example of a busbar assembly including the busbar plate of Fig. 11.

Referring to Figs. 11 and 12, a busbar plate BSP may further include a recess DP. The recess DP may be recessed in a direction from one side of the busbar plate BSP toward the insertion slit SL with respect to a shape on a plane defined by the first direction DR1 and the third direction DR3. In an embodiment, at least a portion of the busbar frame BSF overlapping the recess DP in the second direction DR2 may be exposed by the recess DP.

The recess DP may perform substantially the same (or similar) function as the exposure hole EH. That is, a position of the insertion slit SL (i.e., a welding position) may be easily determined using the recess DP which is relatively easy to be identified in a captured image.

In an embodiment, with respect to a shape on a plane defined by the first direction DR1 and the third direction DR3, at least a portion of an edge of the recess DP may be parallel to the third direction DR3. Here, since at least a portion of the edge of the recess DP has a line shape, identification of the at least a portion of the edge of the recess DP may be facilitated in the captured image. Thus, it may be easy to determine the position of the insertion slit SL with respect to the recess DP.

In an embodiment, the recess DP may include a first recess DP1 and a second recess DP2. The first recess DP1 and the second recess DP2 may be spaced apart from each other. For example, the first recess DP1 and the second recess DP2 may be spaced apart from each other in the first direction DR1. The first recess DP1 may be recessed from a side adjacent to the first insertion slit SL1 of the busbar plate BSP toward the first insertion slit SL1. The second recess DP2 may be recessed from a side adjacent to the second insertion slit SL2 of the busbar plate BSP toward the second insertion slit SL2.

It is understood by those skilled in the art that the plurality of exemplary embodiments described above are specific examples of the following aspects.

Aspect 1. A battery assembly 1 comprising: a cell array 10 comprising a plurality of battery cells 100 arranged in a first direction DR1, wherein each of the plurality of battery cells 100 comprises a terminal part 120 protruding in a second direction DR2 intersecting the first direction DR1; a busbar plate BSP comprising an insertion slit SL into which the terminal part 120 is inserted, wherein the insertion slit SL has a slit shape extending in a third direction DR3 intersecting each of the first direction DR1 and the second direction DR2; and a busbar frame BSF disposed between the busbar plate BSP and the cell array 10 and comprising an insertion hole IH, wherein the insertion hole IH overlaps the insertion slit SL in the second direction DR2 and accommodates at least a portion of the terminal part 120, wherein the busbar plate BSP comprises an exposure hole EH spaced apart from the insertion slit SL and passing through the busbar plate BSP in the second direction DR2 to expose a portion of the busbar frame BSF, and an edge of at least a portion of the exposure hole EH has a line shape parallel to the third direction DR3 with respect to a shape on a plane defined by the first direction DR1 and the third direction DR2.

Aspect 2. The battery assembly 1 according to aspect 1, wherein the exposure hole EH has a rectangular shape, in which each side of the exposure hole EH is parallel to the first direction DR1 or the third direction DR3, with respect to the shape on the plane defined by the first direction DR1 and the third direction DR3.

Aspect 3. The battery assembly 1 according to aspect 1 or aspect 2, wherein the busbar plate BSP further comprises a coupling hole CH passing through the busbar plate BSP in the second direction DR2, and the busbar frame BSF further comprises a coupling member CNP inserted into the coupling hole CH to fix the busbar plate BSP.

Aspect 4. The battery assembly 1 according to aspect 3, wherein the coupling member CNP comprises a heat-fusible member that is thermally fused to one surface of the busbar plate BSP.

Aspect 5. The battery assembly 1 according to aspect 3 or aspect 4, wherein the exposure hole EH is spaced apart from each of the coupling hole CH and the coupling member CNP.

Aspect 6. The battery assembly 1 according to any one of the preceding aspects, wherein a width of the insertion slit SL in the first direction DR1 is less than a width of the insertion hole IH in the first direction DR1.

Aspect 7. The battery assembly 1 according to any one of the preceding aspects, wherein a maximum width of the exposure hole EH in the first direction DR1 is greater than a width of the insertion slit SL in the first direction DR1.

Aspect 8. The battery assembly 1 according to any one of the preceding aspects, wherein the busbar plate BSP comprises a bending part BDP bent to protrude in the second direction DR2, and the bending part BDP comprises a guide groove GH configured to communicate with one end of the insertion slit SL and pass through the bending part BDP in the second direction DR2.

Aspect 9. The battery assembly 1 according to aspect 8, wherein a maximum width of the guide groove GH in the first direction DR1 is greater than a width of the insertion slit SL in the first direction DR1.

Aspect 10. The battery assembly 1 according to aspect 9, wherein a width of the guide groove GH in the first direction DR1 gradually decreases as it approaches one end of the insertion slit SL.

Aspect 11. The battery assembly 1 according to any one of the preceding aspects, wherein a width of the insertion slit SL in the first direction DR1 is about 100% or more and about 105% or less of a width of the terminal part 120 in the first direction DR1.

Aspect 12. The battery assembly 1 according to any one of the preceding aspects, wherein the terminal part 120 is welded to the busbar frame BSF on an area adjacent to the insertion slit SL.

Aspect 13. The battery assembly 1 according to any one of the preceding aspects, wherein the busbar plate BSP further comprises a recess DP recessed from one side of the busbar plate BSP toward the insertion slit SL with respect to the shape on the plane defined by the first direction DR1 and the third direction DR3.

Aspect 14. The battery assembly 1 according to aspect 13, wherein an edge of at least a portion of the recess DP is parallel to the third direction DR3 with respect to the shape on the plane defined by the first direction DR1 and the third direction DR3.

Aspect 15. The battery assembly 1 according to aspect 13 or aspect 14, wherein at least a portion of the busbar frame BSF overlapping the recess DP in the second direction DR2 is exposed by the recess DP.

This disclosure may be modified in various forms, and thus the scope of the present disclosure is not limited to the above-described embodiments. Therefore, if the modified embodiment includes the components of the claims of this disclosure, it should be considered to fall within the scope of the claims of this disclosure.

## Claims

1. A battery assembly comprising:
a cell array comprising a plurality of battery cells arranged in a first direction, wherein each of the plurality of battery cells comprises a terminal part protruding in a second direction intersecting the first direction;
a busbar plate comprising an insertion slit into which the terminal part is inserted, wherein the insertion slit has a slit shape extending in a third direction intersecting each of the first direction and the second direction; and
a busbar frame disposed between the busbar plate and the cell array and comprising an insertion hole, wherein the insertion hole overlaps the insertion slit in the second direction and accommodates at least a portion of the terminal part,
wherein the busbar plate comprises an exposure hole spaced apart from the insertion slit and passing through the busbar plate in the second direction to expose a portion of the busbar frame, and
an edge of at least a portion of the exposure hole has a line shape parallel to the third direction with respect to a shape on a plane defined by the first direction and the third direction.

2. The battery assembly according to claim 1, wherein the exposure hole has a rectangular shape, in which each side of the exposure hole is parallel to the first direction or the third direction, with respect to the shape on the plane defined by the first direction and the third direction.

3. The battery assembly according to claim 1 or claim 2, wherein the busbar plate further comprises a coupling hole passing through the busbar plate in the second direction,
wherein the busbar frame further comprises a coupling member inserted into the coupling hole to fix the busbar plate.

4. The battery assembly according to claim 3, wherein the coupling member comprises a heat-fusible member that is thermally fused to one surface of the busbar plate.

5. The battery assembly according to claim 3 or claim 4, wherein the exposure hole is spaced apart from each of the coupling hole and the coupling member.

6. The battery assembly according to any one of the preceding claims, wherein a width of the insertion slit in the first direction is less than a width of the insertion hole in the first direction.

7. The battery assembly according to any one of the preceding claims, wherein a maximum width of the exposure hole in the first direction is greater than a width of the insertion slit in the first direction.

8. The battery assembly according to any one of the preceding claims, wherein the busbar plate comprises a bending part bent to protrude in the second direction,
wherein the bending part comprises a guide groove configured to communicate with one end of the insertion slit and pass through the bending part in the second direction.

9. The battery assembly according to claim 8, wherein a maximum width of the guide groove in the first direction is greater than a width of the insertion slit in the first direction.

10. The battery assembly according to claim 9, wherein a width of the guide groove in the first direction gradually decreases as it approaches one end of the insertion slit.

11. The battery assembly according to any one of the preceding claims, wherein a width of the insertion slit in the first direction is about 100% or more and about 105% or less of a width of the terminal part in the first direction.

12. The battery assembly according to any one of the preceding claims, wherein the terminal part is welded to the busbar frame on an area adjacent to the insertion slit.

13. The battery assembly according to any one of the preceding claims, wherein the busbar plate further comprises a recess recessed from one side of the busbar plate toward the insertion slit with respect to the shape on the plane defined by the first direction and the third direction.

14. The battery assembly according to claim 13, wherein an edge of at least a portion of the recess is parallel to the third direction with respect to the shape on the plane defined by the first direction and the third direction.

15. The battery assembly according to claim 13 or claim 14, wherein at least a portion of the busbar frame overlapping the recess in the second direction is exposed by the recess.
